# DEMANDE DE BREVET EUROPEEN

(11) **EP 1 341 020 A1**
(43) Date de publication de la demande: **03.09.2003**
(21) Numéro de dépôt: 03290442.7
(22) Date de dépôt: 25.02.2003
(51) Int. Cl.: G02B 6/44

(54) **Cassette pour le lovage et le maintien d'épissures entre fibres optiques et organiseur d'une pluralité desdites cassettes**

(30) Priorité: 28.02.2002 FR 0202815
(71) Demandeur: Nexans, 75008 Paris (FR)
(72) Inventeur: Biaud, Richard, 78260 Acheres (FR); Vincent, Alain, 77230 Juilly (FR)
(74) Mandataire: Feray, Valérie

(57) **Abrégé**

La présente invention se rapporte à une cassette modulaire (1) pour le lovage et le maintien d'épissures entre conducteurs comprenant un module de base (2), sensiblement inscrit dans un plan, comportant un passage d'entrée (3) de conducteurs vers des premiers moyens pour le lovage de conducteurs (4a) et des premiers moyens (51, 52) pour le maintien d'épissures entre conducteurs, des deuxièmes moyens (4b) pour le lovage de conducteurs, un premier module additionnel (20) recevant des conducteurs, sensiblement disposé dans le plan du module de base par des moyens de liaison amovible (50a à 50d, 60b, 90b) au module de base. Le module de base selon l'invention comprend lesdits deuxièmes moyens de lovage et le premier module additionnel selon l'invention comprend des moyens de maintien de raccordements (510) entre conducteurs.

## Description

La présente invention se rapporte aux cassettes et, tout particulièrement aux cassettes destinées à recevoir des conducteurs. Dans tout ce qui suit, on entend par conducteurs aussi bien des éléments filiformes qu'en forme de bande, et en particulier dans lesquels la lumière peut se propager tels que des fibres optiques.

L'organisation de tels conducteurs, par exemple des fibres optiques, dans un contenant exige un système de cassettes qui permet de ranger ces fibres optiques, de respecter les contraintes de rayons de courbure minimum et de faciliter les interventions sur ces fibres. Les cassettes existantes sont dans l'ensemble destinées à permettre le maintien d'un certain nombre de raccordements permanents généralement protégés, tels que des épissures (paire de fibres raccordées entre elles), ainsi qu'à permettre, par des moyens de lovage, le stockage des surlongueurs d'épissures.

Le brevet US5247603 divulgue une cassette modulaire de lovage et de maintien d'épissures formées par des paires de fibres optiques, comprenant un module de base, sensiblement inscrit dans un plan, comportant un passage d'entrée d'un premier groupe de ces paires de fibres, des premiers moyens de lovage du premier groupe de fibres et des moyens de maintien des épissures formées par le premier groupe et un deuxième groupe de ces paires de fibres.

Dans une première configuration, cette cassette comprend en outre un module additionnel de lovage, disposé de façon amovible dans le plan du module de base par des moyens de liaison amovible de type rail insérable dans le module de base, et comportant des deuxièmes moyens de lovage du deuxième groupe de ces paires de fibres.

Dans une autre configuration de réalisation, cette cassette de l'art antérieur comprend en outre un module additionnel dit d'interconnexion, disposé de façon amovible dans le plan du module de base par des moyens de liaison amovible de type rail insérable dans le module de base. Ce module est destiné au guidage du deuxième groupe de fibres et à son raccordement, en sortie du module, par exemple à d'autres fibres optiques. Dans ce cas, les fibres du deuxième groupe, ayant chacune à une extrémité une épissure et à l'autre extrémité un connecteur, sont des intermédiaires de couplage ('pigtail' en anglais) et permettent une connexion indirecte entre les fibres du premier groupe et les autres fibres optiques.

Dans cette cassette de l'art antérieur, seul un module additionnel peut être adjoint au module de base, ce qui limite le champ d'utilisation de cette cassette.

La présente invention a pour but de réaliser une cassette modulaire pour le lovage et le maintien d'épissures entre conducteurs comprenant un module de base remplissant la fonction de lovage de toutes les surlongueurs d'épissure de fibres, ceci afin de permettre à au moins un module additionnel, solidaire du module de base par liaison amovible, d'assurer au moins une fonction de raccordement de conducteurs déterminée par rapport aux besoins du client.

A cet effet, l'invention propose une cassette modulaire pour le lovage et le maintien d'épissures entre conducteurs comprenant :
- un module de base, sensiblement inscrit dans un plan, comportant un passage d'entrée de conducteurs vers des premiers moyens pour le lovage de conducteurs et des premiers moyens pour le maintien d'épissures entre conducteurs,
- des deuxièmes moyens pour le lovage de conducteurs,
- un premier module additionnel recevant des conducteurs, sensiblement disposé dans le plan du module de base par des moyens de liaison amovible au module de base,
**caractérisée en ce que** le module de base comprend lesdits deuxièmes moyens de lovage et **en ce que** le premier module additionnel comprend des moyens de maintien de raccordements entre conducteurs.

Le raccordement à maintenir peut être direct (de type épissure, joint, connecteur, etc...) et/ou indirect (de type 'pigtail', jarretière, cordon de connexion, ou via des composants de type multiplexeurs/démultiplexeurs en longueurs d'onde, etc...) et permanent et/ou provisoire.

La cassette modulaire selon l'invention permet de rapprocher toutes les fonctions usuelles souhaitées dans un volume global le plus compact possible. Par exemple, le module de base remplit les fonctions de lovage et de maintien d'épissures tandis que le premier module additionnel réalise la fonction de brassage et/ou d'intégration de composant actifs ou passifs.

Avantageusement, la cassette selon l'invention peut comprendre un deuxième module additionnel recevant des conducteurs, sensiblement disposé dans le plan du module de base par des moyens de liaison amovible au premier module additionnel.

L'ajout d'un deuxième module étend les configurations possibles de la cassette selon l'invention. Le deuxième module peut ainsi réaliser la même fonction que le premier module, pour accroître la capacité des éléments de raccordements à inclure et maintenir dans la cassette, ou une fonction distincte telle qu'un simple guidage des conducteurs vers une sortie de la cassette.

Dans un mode de réalisation préféré, le deuxième module additionnel selon l'invention comprend des moyens de maintien de raccordements entre conducteurs.

Les moyens de maintien de raccordement selon l'invention peuvent être choisis parmi des moyens de maintien d'épissures et des moyens de maintien de connecteurs.

Par exemple, des moyens de maintien d'épissures d'un premier et/ou d'un deuxième module additionnel peuvent permettre d'augmenter le nombre de maintien d'épissures et/ou de diversifier les types d'épissures maintenues, ceci en fonction des configurations des opérateurs.

En outre, chaque module additionnel peut être hybride c'est-à-dire comprendre à la fois les deux types de maintien de raccordement.

Le module de base selon l'invention peut comprendre un passage de sortie de conducteurs, distinct dudit passage d'entrée, disposé pour guider les conducteurs issus des premiers et/ou deuxièmes moyens de lovage et à destination d'au moins un module additionnel.

Dans un mode de réalisation avantageux, le module de base selon l'invention comprend des deuxièmes moyens de maintien d'épissure amovibles et insérés, en position de stockage, dans l'un des moyens de lovage.

En position d'utilisation, les deuxièmes moyens de maintien d'épissure peuvent remplacer au moins l'un des premiers moyens de maintien d'épissures, également amovibles, ou bien être superposés verticalement à l'un de ces premiers moyens de maintien d'épissures.

En outre, les moyens de liaison amovible selon l'invention peuvent être de type patte d'encliquetage.

De préférence, la cassette selon l'invention peut comprendre au moins un couvercle de protection recouvrant l'un des moyens pour le maintien des épissures.

L'invention propose également un organiseur de conducteurs comprenant une pluralité de cassettes telles que décrites précédemment, superposables et montées pivotantes sur un support de logement.

Chacune desdites cassettes superposées dans l'organiseur peut comprendre un bras flexible de pivotement de la cassette, le bras étant plié et rabattu contre le module de base quand la cassette est en position fermée dans l'organiseur et se dépliant lors de la mise en position ouverte de la cassette.

Les caractéristiques et objets de la présente invention ressortiront de la description détaillée donnée ci-après en regard des figures annexées, présentées à titre illustratif et nullement limitatif.

Dans ces figures :
- Les figures 1 et 2 sont des vues en perspective d'une cassette modulaire selon l'invention dans deux modes de réalisations préférés ;
- Les figures 3 et 4 sont des vues en perspective d'un organiseur selon l'invention ;
- La figure 5 montre un exemple de baie incorporant trois organiseurs tels que celui décrit en figure 3.

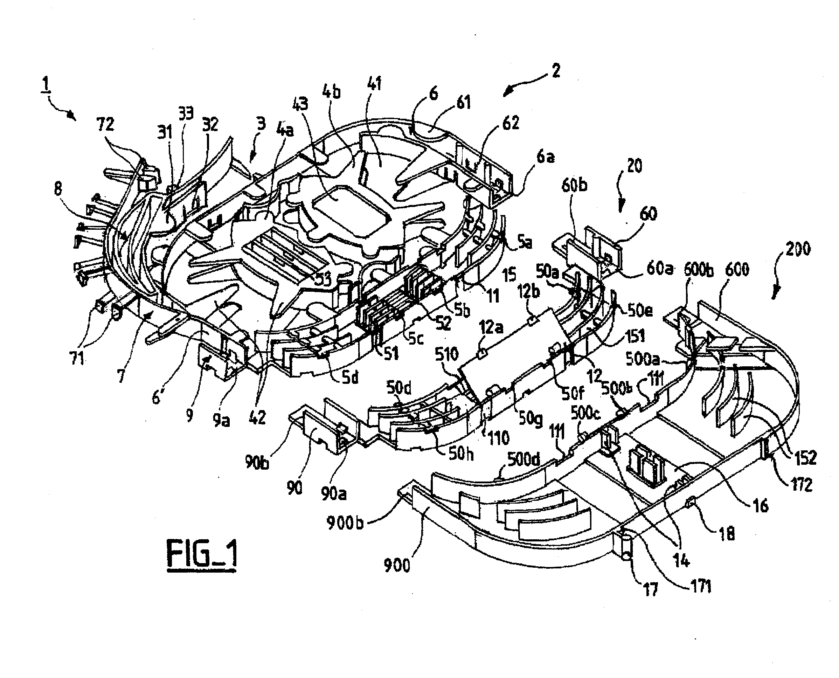

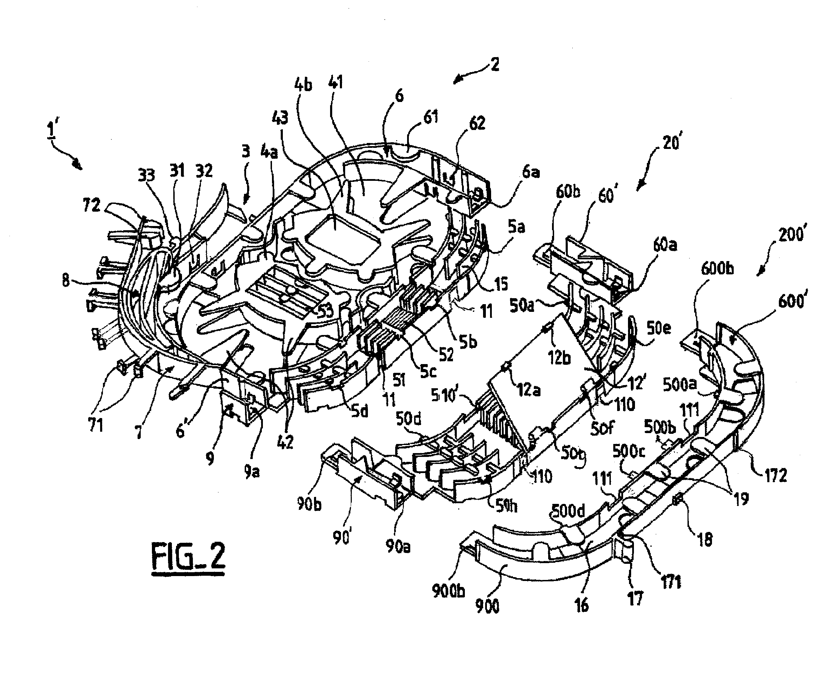

Les figures 1 et 2 montrent une cassette modulaire selon l'invention 1, 1' respectivement. Les éléments remplissant la même fonction et identiques dans les deux modes de réalisation sont référencés pareillement.

Ainsi qu'illustré dans ces figures, la cassette 1, 1' comprend un module de base 2, un premier module additionnel 20, 20' ainsi qu'un deuxième module additionnel 200, 200'. Les modules additionnels 20, 20', 200, 200' sont disposés sensiblement dans le plan par exemple horizontal du module de base 2 et comportent des moyens de liaison amovible, le premier module additionnel 20, 20' avec le module de base, le deuxième module additionnel 200, 200' avec le premier module additionnel 20, 20' respectivement. Tous les modules de la cassette 1, 1' et les différentes dispositions prévues sur ces derniers sont réalisés en matière plastique et sont moulés.

Le module de base 2 comporte principalement :
- un passage 3 d'entrée et/ou de sortie de conducteurs tels que des fibres optiques, groupées ou non, dénudées ou non, passage prévu sur l'un des bords périphériques avant du module 2 et à proximité d'un coin,
- des premiers et deuxièmes moyens de lovage 4a, 4b des conducteurs reçus du passage d'entrée 3 notamment,
- des premiers moyens de maintien 51, 52 d'épissures entre fibres, respectivement pour loger des moyennes et petites tailles de protections d'épissures, situés dans une partie arrière du module de base 2,
- des deuxièmes moyens de maintien d'épissure amovibles 53 pour loger des grandes tailles des protections d'épissures,
- un passage de sortie et/ou d'entrée 6 des conducteurs de type fibres et/ou câbles, distinct du passage d'entrée et/ou de sortie 3, disposé pour guider les conducteurs lovés issus des premiers et/ou deuxièmes moyens de lovage 4a, 4b et à destination par exemple du deuxième module additionnel 200, 200',

Les premiers et deuxième moyens de lovage sont dans ces deux réalisations constitués par un tambour 4a, 4b à partie périphérique semi-circulaire qui permet de lover les fibres dans les espaces libres tels que 41, laissés en creux et communiquant entre eux et avec le passage d'entrée et/ou de sortie 3. Les moyens de lovage 4a, 4b permettent de gérer tous types de surlongueurs et la disposition des tambours autorise un inversion du sens de lovage. En outre, un emplacement d'étiquetage 43 est défini sur le tambour de lovage 4b.

En regard des espaces de lovage 41 s'étendent des moyens de retenue d'épissures et/ou des conducteurs lovés tels que des pattes plates 42 portées par les bords périphériques du module de base 2 et/ou les moyens 4a, 4b.

Les moyens de maintien d'épissures 51 à 53 sont formés de jeux de nervures entre lesquelles se coincent les épissures et avantageusement adaptés à des épissures de différents types. Les premiers moyens 51 à 52 sont sécables sur la cassette.

Les deuxièmes moyens de maintien d'épissure amovibles 53 sont insérés, en position de stockage, dans les premiers moyens de lovage 4a. En position d'utilisation, les deuxièmes moyens de maintien d'épissure vont remplacer les premiers moyens 51 et/ou 52 ou sont superposés aux premiers moyens de maintien d'épissure 52.

De part et d'autre des moyens de maintien 51, 52 sont disposés des canaux de guidage 15 des fibres à épissurer pour le respect des rayons de courbure minimum notamment.

Le passage d'entrée et/ou de sortie 3 comprend des moyens de retenue 31, de type patte plate, de conducteurs, et prévoit dans une zone 32 l'emplacement d'un élément de type accroche-câble.

De même, le passage de sortie et/ou d'entrée 6 des conducteurs de type fibres et/ou câbles comprend des moyens de retenue 61, de type patte plate, de conducteurs, et prévoit dans une zone 62 l'emplacement d'un élément pour le guidage de câbles.

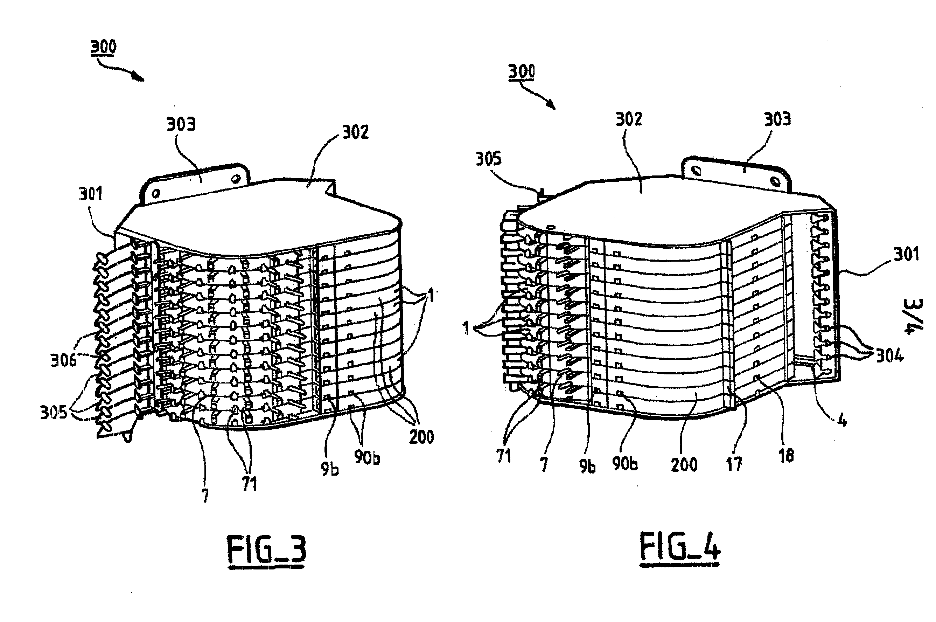

Par ailleurs, le module 2 comprend un bras flexible 7 de pivotement de la cassette 1, 1' montée pivotante sur un support de logement (non représenté) d'un organiseur (voir figures 3, 4).

Le bras 7 est plié et rabattu contre le module 2 quand la cassette 1, 1' est en position fermée dans l'organiseur et se déplie lors de la mise en position ouverte de la cassette. Le module 2 comporte une lumière traversante 8 de guidage au cours du pivotement de la cassette, qui reçoit un axe de guidage (non représenté) solidaire du support de l'organiseur et parallèle à l'axe de fixation. Cette lumière est de forme oblongue et arquée. Elle est formée sensiblement le long du coin prévu arqué du module 2 contre lequel se rabat le bras 7.

Le bras flexible 7 présente deux pattes terminales 72 de fixation sur le support de logement. Ces pattes de fixation 72 assurent une double fonction. D'une part, les parties extérieures de ces pattes 72 s'encliquettent dans une ouverture rectangulaire du support de logement pour le maintien du bras 7 dans ce dernier. D'autre part, lors du mouvement de fermeture de la cassette 1, un doigt 33 situé sur le bord extérieur du passage d'entrée et/ou de sortie 3 s'insère entre les pattes 72 pour l'indexation (blocage) en position fermée.

Le bras 7 présente en outre des ailettes 71 solidaires de ses deux bords longitudinaux et saillantes d'un même côté, pour la rétention des conducteurs notamment allant vers ou venant du deuxième module additionnel 200, 200'. Le bras 7 définit un chemin constant en longueur de guidage des conducteurs et ainsi permet d'éviter totalement, sinon quasi totalement, toute contrainte sur les conducteurs au cours du pivotement de la cassette. Les ailettes 71 sont de préférence alternées d'un bord à l'autre du bras, pour faciliter l'insertion de conducteurs dans le chemin ainsi défini. Les ailettes 71 ne sont prévues que sur la seule partie du bras 7 affectée à l'acheminement des conducteurs. Au moins certaines de ces ailettes 71 ont une partie terminale repliée en regard du bras 7, pour retenir et protéger les conducteurs et délimiter leur chemin de guidage. Bien entendu le bras flexible 7 peut être fixé au module 2 au lieu de faire partie intégrante de celui-ci.

Une partie 6' du bord périphérique le long du bras 7 est de préférence sécable de façon à créer une autre ouverture pour l'entrée et/ou la sortie de conducteurs.

Concernant la liaison amovible entre le module de base 2 et le premier module additionnel 20, 20', le module de base 2 comprend des moyens de réception 6a, 9a de pattes d'encliquetage 60b, 90b du premier module additionnel 20, 20'. Ces moyens 6a, 9a sont disposés respectivement l'un à l'extrémité du passage de sortie et/ou d'entrée 6 et l'autre sur un couloir de sortie 9 situé sur le côté opposé à ce passage 6. Le module de base 2 comprend aussi des créneaux 5a à 5d disposés sur le bord périphérique arrière qui est opposé à celui du passage d'entrée et/ou de sortie 3, aptes à recevoir des pattes saillantes 50a, 50d (certaines non visibles) du premier module additionnel 20, 20'.

Le premier module additionnel 20, 20' comporte principalement :
- un couloir de guidage dit d'entrée 60, 60' de conducteurs notamment venant du passage de sortie et/ou d'entrée 6 vers le deuxième module additionnel 200, 200', et comprenant la partie saillante 60b définissant la patte d'encliquetage insérable dans les moyens de réception 6a,
- un autre couloir de guidage dit de sortie 90, 90' de conducteurs notamment venant du deuxième module additionnel 200, 200', et comprenant la partie saillante 90b de type patte d'encliquetage insérable dans les moyens de réception 9a, le couloir de sortie 90, 90' étant disposé sur le côté opposé au couloir d'entrée 60, 60',
- deux types de moyens de maintien 510, 510' d'épissures entre fibres (un seul visible) par exemple similaires aux moyens 51, 52,
- un couvercle de protection 12, 12' recouvrant les moyens 510, 510' et comportant deux coins de préhension 12a, 12b.

Les deuxièmes moyens de maintien d'épissure 53 peuvent remplacer au moins une partie des moyens 510, 510' également amovibles. De part et d'autre des moyens de maintien 510, 510' sont disposés des canaux de guidage 151, 151' par exemple similaires aux canaux 15 du module de base 2.

Concernant la liaison amovible entre modules additionnels, le premier module 20, 20' comprend des moyens de réception 60b, 90b de pattes d'encliquetage 600b, 900b, du deuxième module additionnel 200, 200' disposés dans les couloirs de guidage associés 60, 90, 60', 90'. Le premier module comprend aussi des créneaux 50e à 50h disposés sur le bord périphérique dit arrière attenant au deuxième module additionnel, pour recevoir des pattes saillantes 500a à 500d de ce dernier.

Le deuxième module additionnel 200, 200' comporte principalement :
- un passage dit d'entrée 600, 600' de conducteurs notamment venant du couloir de guidage 60, 60' et comprenant la partie saillante 600b définissant la patte d'encliquetage insérable dans les moyens de réception 60a,
- un passage dit de sortie 900, 900' des conducteurs reçus par le deuxième module additionnel 200, 200', et comprenant la partie saillante 900b de type patte d'encliquetage insérable dans les moyens de réception 90a, le passage 900, 900' étant disposé sur le côté opposé au passage 600, 600'.

Le deuxième module additionnel 200, 200' comporte un doigt 17 saillant à proximité d'un coin du bord périphérique arrière proche du passage 900, 900'. Ce doigt 17 est d'épaisseur moindre que celle de la cassette 1, 1' pour sa sélection et sa préhension quand d'autres cassettes sont superposées. Il permet de venir actionner ladite cassette 1, l'voulue parmi les cassettes superposées, pour la mise de cette cassette en position ouverte.

Par ailleurs, le module de base 2 et les modules additionnels 20, 20', 20, comportent des ouvertures 11, 110, 111 entre les canaux de guidage 15, 151, 151' et les moyens de maintien 51, 510, 510' pratiquées sur leur(s) bord(s) périphérique(s) afin de permettre le mouvement de rotation du couvercle de protection 12, 12'. Le module 200' comporte également de telles ouvertures 111 sur le bord périphérique avant.

Deux glissières 171, 172 permettent la mise en place d'une étiquette de repérage (non représentée), une patte 18 assurant une butée en translation.

Le deuxième module représenté en figure 1 comprend en outre des moyens 14 de maintien de deux connecteurs (non représentés). Ces moyens sont adaptés aux connecteurs à loger tels que les connecteurs à multivoies d'entrée et/ou de sortie.

De part et d'autre des moyens de maintien 14, le fond 16 du module 200 est ouvert, et ce module comprend des canaux de guidage 152 par exemple similaires aux canaux 15 du module de base 2.

Le deuxième module 200' représenté en figure 2 comprend en outre des moyens de retenue 19 des conducteurs, de type pattes plates alternativement portées par chaque bord périphérique avant et arrière.

Dans une variante du premier mode de réalisation (non représentée), la cassette selon l'invention peut comporter un module de base comportant notamment une ouverture telle que possible par rupture de la partie sécable 6' et remplaçant le passage de sortie 6. Dans cette variante, la cassette comprend de préférence seulement un premier module additionnel pour le maintien d'épissure. Les deux modules ne comprenant alors pas de couloirs de sortie, les moyens de liaisons amovibles de type pattes d'encliquetage sont déplacés en conséquence vers le centre du bord périphérique arrière.

Les figures 3 et 4 sont des vues en perspective d'un organiseur selon l'invention 300 comprenant une pluralité de cassettes 1 telles que celle décrite par exemple dans le premier mode de réalisation.

Comme déjà illustré en figures 1, 2 le bord périphérique arrière des modules 200 comprend la patte 18 et le doigt de préhension 17. Ensuite vers l'avant de chaque cassette, le bord périphérique latéral comprend les moyens de réception d'encliquetage 9b, 90b suivis du bras 7.

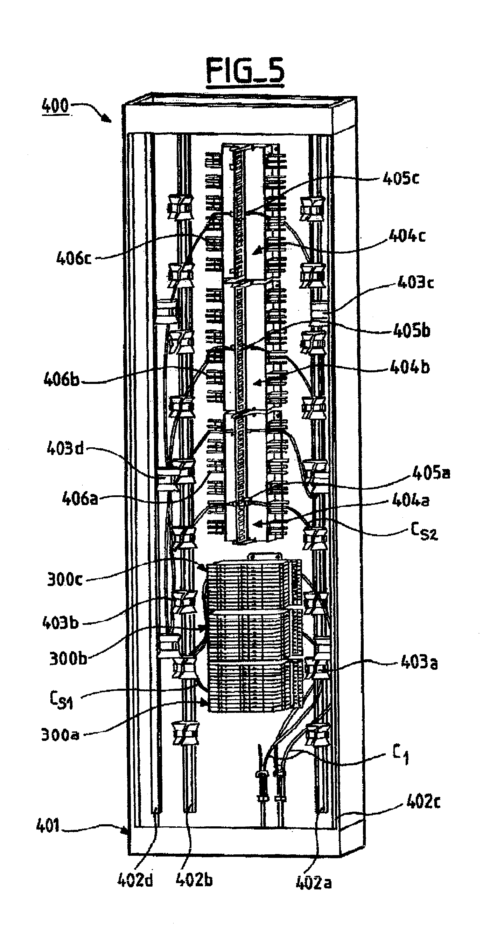

Les cassettes 1 sont superposables et montées pivotantes dans un support de logement 301. L'organiseur comporte aussi un couvercle de protection 302 recouvrant les cassettes 1 et un montant 303 à deux trous pour la fixation de l'organiseur dans une baie (voir figure 5).

Un premier dispositif d'épanouissement étagé à canaux de guidage individuels par cassette 304 assure l'entrée et l'amarrage par exemple de fibres d'un câble principal d'arrivée et/ou de câbles de distribution C₁ vers le passage d'entrée et de sortie (non visible) de chaque cassette.

De même, un autre dispositif d'épanouissement étagé à canaux de guidage individuels 305 par cassette, et à ailettes 306, assure la sortie et l'amarrage par exemple de fibres d'un câble principal de sortie et/ou de câbles de distribution (non représentés) venant des bras 7 à ailettes 71 de chaque cassette 1.

La figure 5 montre un exemple de baie 400 incorporant trois organiseurs 300a à 300c tels que celui décrit en figure 3.

La baie comprend un boîtier 401 avec quatre montants verticaux 402a à 402d comprenant chacun une pluralité d'éléments guidants 403a à 403d pour acheminer des conducteurs C₁, Cₛ₁, Cₛ₂ soit vers les organiseurs soit vers des panneaux de brassage 404a à 404c comprenant des moyens d'interconnexion 405a à 405c et des canaux de guidage 406a à 406c. La disposition des organiseurs dans la baie 400 peut être changée.

Bien entendu, la description qui précède a été donnée à titre purement illustratif. On pourra sans sortir du cadre de l'invention remplacer tout moyen par un moyen équivalent.

Les passages de sortie selon l'invention peuvent être des passages d'entrée et inversement.

Le nombre, le choix et l'ordre des modules additionnels dépendent des besoins des utilisateurs.

Les moyens de maintien de raccordement des modules additionnels selon l'invention peuvent être des moyens de maintien de composants actifs et/ou passifs.

## Revendications

1. Cassette modulaire (1, 1') pour le lovage et le maintien d'épissures entre conducteurs comprenant :
- un module de base (2), sensiblement inscrit dans un plan, comportant un passage d'entrée de conducteurs (3) vers des premiers moyens pour le lovage de conducteurs (4a) et des premiers moyens (51, 52) pour le maintien d'épissures entre conducteurs,
- des deuxièmes moyens (4b) pour le lovage de conducteurs,
- un premier module additionnel (20, 20') recevant des conducteurs, sensiblement disposé dans le plan du module de base par des moyens de liaison amovible (50a à 50d, 60b, 90b), au module de base,
**caractérisée en ce que** le module de base comprend lesdits deuxièmes moyens de lovage et **en ce que** le premier module additionnel comprend des moyens de maintien de raccordements (510, 510') entre conducteurs.

2. Cassette modulaire (1, 1') selon la revendication 1 **caractérisée en ce qu'**elle comprend un deuxième module additionnel (200, 200') recevant des conducteurs, sensiblement disposé dans le plan du module de base par des moyens de liaison amovible (500a à 500d, 600b, 900b) au premier module additionnel (20, 20').

3. Cassette modulaire (1) selon la revendication 2 **caractérisée en ce que** le deuxième module additionnel (200) comprend des moyens de maintien de raccordements (14) entre conducteurs.

4. Cassette modulaire (1, 1') selon l'une des revendications 1 à 3
**caractérisée en ce que** les moyens de maintien de raccordement (510, 510', 14) sont choisis parmi des moyens de maintien d'épissures (510, 510') et des moyens de maintien de connecteurs (14).

5. Cassette modulaire (1, 1') selon l'une des revendications 1 à 4 **caractérisée en ce que** le module de base (2) comprend un passage de sortie (6) de conducteurs, distinct dudit passage d'entrée (3), disposé pour guider les conducteurs issus des premiers et/ou deuxièmes moyens de lovage (4a, 4b) et à destination d'au moins un module additionnel (200, 200').

6. Cassette modulaire (1, 1') selon l'une des revendications 1 à 5 **caractérisée en ce que** le module de base (2) comprend des deuxièmes moyens de maintien d'épissure (53) amovibles et insérés, en position de stockage, dans l'un des moyens de lovage (4a).

7. Cassette modulaire (1, 1') selon l'une des revendications 1 à 6 **caractérisée en ce que** les moyens de liaison amovible (60a, 90a, 600b, 900b) sont de type patte d'encliquetage.

8. Cassette modulaire (1, 1') selon l'une des revendications 1 à 7 **caractérisée en ce qu'**elle comprend au moins un couvercle de protection (12, 12') recouvrant l'un des moyens de maintien d'épissures (510, 510').

9. Organiseur de conducteurs (300) comprenant une pluralité de cassettes (1) selon l'une des revendications 1 à 8, superposables et montées pivotantes sur un support de logement (301).

10. Organiseur de conducteurs (300) selon la revendication 9 **caractérisé en ce que** chacune desdites cassettes (1) superposées comprend un bras flexible de pivotement (7) de la cassette, le bras étant plié et rabattu contre le module de base (2) quand la cassette est en position fermée dans l'organiseur et se dépliant lors de la mise en position ouverte de la cassette.
